# EUROPÄISCHE PATENTSCHRIFT

(11) **EP 0 990 240 B1**
(45) Veröffentlichungstag und Bekanntmachung des Hinweises auf die Patenterteilung: **22.08.2001**
(21) Anmeldenummer: 98936187.8
(22) Anmeldetag: 17.06.1998
(51) Int. Cl.: H01G 2/08

(54) **ELEKTRISCHER KONDENSATOR**
ELECTRIC CAPACITOR
CONDENSATEUR ELECTRIQUE

(30) Priorität: 18.06.1997 DE 19725843
(43) Veröffentlichungstag der Anmeldung: 05.04.2000
(73) Patentinhaber: EPCOS AG, 81541 München (DE)
(72) Erfinder: MICHEL, Hartmut, D-89520 Heidenheim (DE)
(74) Vertreter: Epping, Wilhelm, Dipl.-Ing.
(86) Internationale Anmeldenummer: DE9801643
(87) Internationale Veröffentlichungsnummer: WO9858396

(56) Entgegenhaltungen:
- DE-A- 4 331 377
- DE-U- 29 617 888

## Beschreibung

Die Erfindung betrifft einen elektrischen Kondensator, insbesondere Aluminium-Elektrolytkondensator für Wechselstrombetrieb, der in ein metallisches Gehäuse mit ebenem Gehäuseboden eingebaut ist, und bei dem der Gehäuseboden gegen ein Kühlelement gepreßt ist.

Ein derartiges Bauelement ist aus dem Siemens Matsushita Components Datenbuch 1997, "Aluminium-Elektrolytkondensator", Seite 146, bekannt.

Bei einer Belastung von Kondensatoren, insbesondere Aluminium-Elektrolytkondensatoren mit Wechselspannung, führen die ohmschen Verluste zu einer Eigenerwärmung der Kondensatoren. Diese Temperaturerhöhung begrenzt die maximale Wechselstrombelastbarkeit und Brauchbarkeitsdauer dieser Kondensatoren.

Durch eine Zwangskühlung des Bauelements, insbesondere des Becherbodens, kann die Wechselstrombelastbarkeit und Brauchbarkeitsdauer angehoben werden. Um eine gute Wärmeableitung zu erreichen, muß der Kondensatorboden möglichst dauerhaft formschlüssig am Kühlkörper anliegen.

Bisher sind eine Reihe von Maßnahmen bekannt, die dieses Problem aber nur unzureichend lösen. So ist es bekannt, einen Schraubbolzen am Becherboden anzubringen, mit dessen Hilfe eine Befestigung am Kühlkörper erfolgt. Hierbei ist allerdings nicht gewährleistet, daß der Becherboden auch im Randbereich mit dem Kühlkörper verbunden wird.

Weiterhin ist es bekannt, Befestigungen mittels Ringschellen vorzunehmen, wobei sich diese Befestigung allerdings durch thermische und mechanische Belastungen leicht lösen kann, so daß auch hier eine dauerhafte formschlüssige Verbindung von Becherboden und Kühlkörper nicht erreicht wird. Aus dem oben genannten Stand der Technik ist eine Klemmbefestigung bekannt, die die Becherwandung direkt oberhalb des Becherbodens leicht einschnürt und damit den Becherboden am Rand befestigt. Hierdurch wird zwar eine dauerhafte formschlüssige Verbindung von Becherboden und Kühlkörper erreicht. Allerdings hat die bekannte Klemmverbindung einen hohen Platzbedarf, zum Beispiel bei einem Becherdurchmesser von 75 mm hat die Klemmbefestigung einen äußeren Durchmesser von 116 mm.

Aufgabe der Erfindung ist es daher, den eingangs genannten Kondensator dauerhaft formschlüssig mit einem Befestigungselement zu fixieren, das einen geringeren Platzbedarf als die bekannte Klemmvorrichtung besitzt.

Diese Aufgabe wird erfindungsgemäß dadurch gelöst, daß das Kühlelement eine dem Gehäuseumfang entsprechende Vertiefung besitzt, und daß im Kühlelement zumindest an zwei gegenüberliegenden Seiten der Vertiefung Befestigungsstifte angeordnet sind, die teilweise in die Vertiefung hineinragen.

Durch diese Integration des Befestigungselements in den Kühlkörper wird eine platzsparende und dauerhaft formschlüssige Fixierung des Kondensators auf dem Kühlelement erreicht.

Zweckmäßige Ausgestaltungen sind in den Unteransprüchen angeführt.

Der Gegenstand der Erfindung wird anhand der folgenden Ausführungsbeispiele näher erläutert.

In der dazugehörenden Zeichnung zeigen
- Figur 1: eine Seitenansicht eines in einem Kühlelement befestigten Kondensators und
- Figur 2: die Draufsicht auf den in Figur 1 dargestellten Kondensator.

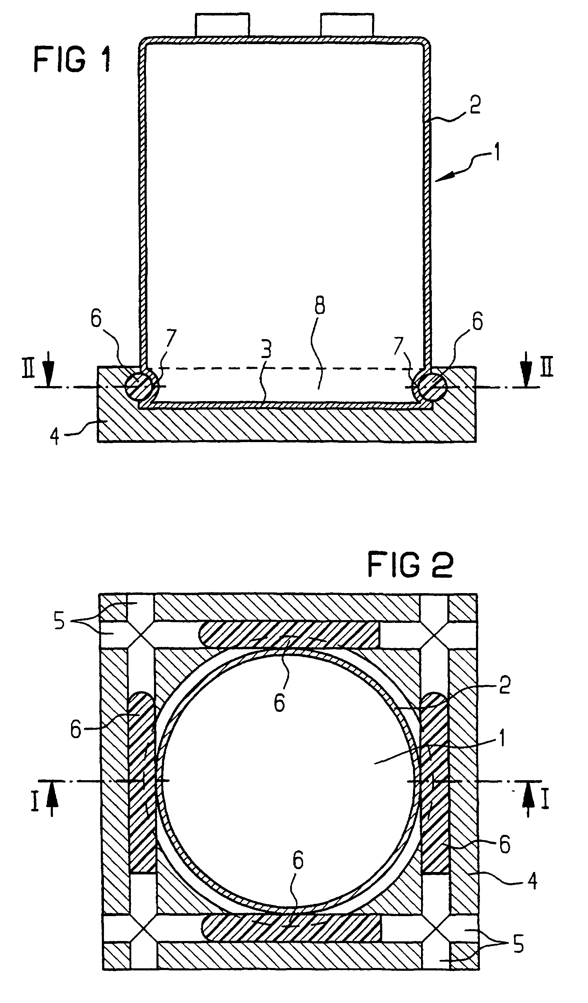

In der Figur 1 ist ein Kondensator 1 dargestellt, der in ein Gehäuse 2 mit ebenem Gehäuseboden 3 eingebaut ist. Der Gehäuseboden 3 befindet sich in formschlüssigem Kontakt mit einem Kühlelement 4. Im Kühlelement 4 ist eine Vertiefung 8 angebracht, deren Durchmesser sich nach dem Durchmesser des Gehäuses 2 richtet.

In der Figur 2 ist zu erkennen, daß im Kühlelement 4 seitliche Bohrungen 5 angebracht sind, die teilweise in die Vertiefung 8 hineinragen. In den Bohrungen 5 befinden sich Befestigungsstifte 6, die in die Bohrungen 5 soweit hineingedrückt werden, daß sie die Wandung des Gehäuses 2 oberhalb des Boden 3 an den Stellen 7 einkerben und auf beiden Seiten der Vertiefung 8 in den Bohrungen 5 sitzen. Dadurch wird der Kondensatorboden 3 auf den Boden der Vertiefung 8 gepreßt und damit formschlüssig mit dem Kühlelement 4 verbunden.

Die Befestigungsstifte 6 können aus Kunststoff bestehen oder auch als isolierte Metallstifte ausgebildet sein. Zweckmäßigerweise sind die Befestigungsstifte 6 mit einer abgerundeten Spitze versehen.

Bei einem Ausführungsbeispiel wird ein Aluminium-Elektrolytkondensator mit dem Gehäusedurcmesser 76,9 mm in eine Vertiefung mit einem Durchmesser von 77,5 mm und einer Tiefe von 5 mm eingesetzt und mit 5 mm starken Kunststoffstiften befestigt. Die Kunststoffstifte kerben die Becherwandung oberhalb des Becherbodens ca. 1,2 mm ein. Ohne weitere Zwangskühlungsmaßnahmen des Kühlelements wird der thermische Außenwiderstand des Kondensators durch das Kühlelement um 20 % reduziert. Die gesamte Befestigung einschließlich Kühlkörper hat eine Kantenlänge von 90 mm.

Bei einer Bestückung des Kühlkörpers mit mehreren Kondensatoren, die in einer Kondensatorbatterie angeordnet sind, können die Vertiefungen so angeordnet werden, daß ein Stift zwei Kondensatoren einkerbt, so daß die Kantenlänge um weitere 8 mm je Kondensatorpaar reduziert werden kann.

## Patentansprüche

1. Fixierung eines elektrischen Kondensators; insbesondere Aluminium-Elektrolytkondensator für Wechselstrombetrieb, der in ein metallisches Gehäuse mit ebenem Gehäuseboden eingebaut ist, und bei dem der Gehäuseboden gegen ein Kühlelement gepreßt ist,
dadurch gekennzeichnet,
daß das Kühlelement (4) eine dem Gehäuseumfang entsprechende Vertiefung (8) besitzt und daß im Kühlelement (4) zumindest an zwei gegenüberliegende Seiten der Vertiefung (8) Befestigungsstifte (6) angeordnet sind, die teilweise in die Vertiefung (8) hineinragen.

2. Fixierung eines Elektrischen Kondensators nach Anspruch 1,
**dadurch gekennzeichnet**,
daß die Befestigungsstifte (6) aus Kunststoff bestehen und in im Kühlelement (4) angeordneten seitlichen Bohrungen (5) geführt sind.

3. Fixierung eines Elektrischen Kondensators nach Anspruch 1 oder 2,
**dadurch gekennzeichnet**,
daß das Kühlelement (4) Vertiefungen (8) für mehrere Kondensatoren (1) aufweist, und daß die inneren Befestigungsstifte (6) zur Fixierung von jeweils 2 Kondensatoren (1) dienen.

## Claims

1. Fixing of an electric capacitor, in particular an aluminium electrolyte capacitor for alternating-current operation, which is installed in a metallic housing with a planar housing base, and in which the housing base is pressed onto a cooling element, characterized in that the cooling element (4) has a recess (8) which corresponds to the circumference of the housing, and in that securing pins (6), which partially project into the recess (8), are arranged in the cooling element (4) at least on two opposite sides of the recess (8).

2. Fixing of an electric capacitor according to Claim 1, characterized in that the securing pins (6) consist of plastic and are guided in lateral bores (5) arranged in the cooling element (4).

3. Fixing of an electric capacitor according to Claim 1 or 2, characterized in that the cooling element (4) has recesses (8) for a plurality of capacitors (1), and in that the inner securing pins (6) serve to fix in each case two capacitors (1).

## Revendications

1. Dispositif d'immobilisation d'un condensateur électrique, notamment d'un condensateur électrolytique à l'aluminium pour un fonctionnement en courant alternatif, qui est monté dans un godet métallique ayant un fond plan et dans lequel le fond du godet est pressé sur un élément de refroidissement
caractérisé
en ce que l'élément (4) de refroidissement a une cavité (8) correspondant au pourtour du godet et en ce qu'il est prévu dans l'élément (4) de refroidissement, au moins sur deux côtés opposés de la cavité (8), des broches (6) de fixation, qui pénètrent en partie dans la cavité (8).

2. Dispositif d'immobilisation d'un condensateur électrique suivant la revendication 1,
caractérisé
en ce que les broches (6) de fixation sont en matière plastique et passent dans des trous (5) latéraux ménagés dans l'élément (4) de refroidissement.

3. Dispositif d'immobilisation d'un condensateur électrique suivant la revendication 1 ou 2,
caractérisé
en ce que l'élément (4) de refroidissement a des cavités (8) pour plusieurs condensateurs (1) et en ce que les broches (6) intérieures de fixation servent à l'immobilisation de respectivement deux condensateurs (1).
